# EUROPEAN PATENT SPECIFICATION

(11) **EP 3 412 533 B1**
(45) Date of publication and mention of the grant of the patent: **24.07.2024**
(21) Application number: 17175141.5
(22) Date of filing: 09.06.2017
(51) Int. Cl.: B60W 50/08, B60W 50/10, B60W 30/182, B60W 40/08

(54) **METHOD AND VEHICLE FOR ASSISTING A DRIVER IN DRIVING SUCH VEHICLE**
VERFAHREN UND FAHRZEUG ZUR UNTERSTÜTZUNG EINES FAHRERS BEIM FAHREN DES FAHRZEUGS
PROCÉDÉ ET VÉHICULE POUR AIDER UN CONDUCTEUR À CONDUIRE UN TEL VÉHICULE

(43) Date of publication of application: 12.12.2018
(73) Proprietor: Honda Research Institute Europe GmbH, 63073 Offenbach/Main (DE)
(72) Inventor: Goerick, Christian, 63073 Offenbach/Main (DE); Dietrich, Manuel, 63073 Offenbach/Main (DE)
(74) Representative: Beder, Jens

(56) References cited:
- EP-A1- 1 523 435
- WO-A1-2007/090896
- US-A1- 2008 071 446
- US-A1- 2014 309 849
- US-A1- 2015 307 105

## Description

The invention relates a method for assisting a driver in driving a vehicle and the respective vehicle.

During the last twenty years, driver assistance systems have become more and more popular. One of the first driver assistance systems was an anti-blocking system. With such ABS, it was possible to individually control the brake pressure of any wheel of the vehicle. This capability was then further exploited by the first ESC (electronic stability control). Such ESC systems made use of the possibility to individually brake a wheel of the vehicle in order to assist for example a turning movement in case that steering angle, the direction of movement of the vehicle and velocity do not fit to each other. By doing so, the system intervenes with the operation of the vehicle by the driver himself.

Of course, it is not intended to overrule the driver permanently and thus a threshold is defined and only if measured values describing the current driving state of the vehicle exceed a certain threshold, then the system automatically starts intervening the driving operation. The threshold describes a borderline or vehicle dynamics to ensure that the vehicle state stays within the physical constraints.

Apart from such active safety systems in vehicles that are controlled only based on the vehicle state alone, it is also more and more common that the driver's state is analysed. As a result, it is possible to warn a driver of a vehicle for example in case that he gets tired or in case that he does not pay the necessary attention to the environment surrounding his vehicle. Further, the state of the vehicle itself together with information obtained on the environment are analysed in order to get an understanding of a traffic situation. Starting from such understanding of the traffic situation, it is then possible to assist a driver for example by making proposals with respect to an escape strategy or warn the driver about other traffic objects he might not have recognized.

In order to avoid such distracting vehicle components and equipment, it is suggested for example in DE 10 2008 038 816 A1 that the driver's state is analysed by a vehicle system and based on such detected driver state, the amount of operations that may be performed by the driver can be limited. Thus, all the options the driver has are adapted to the current attention level of the driver for example. Furthermore, it is described that driver assistance may be adapted to the driver's state, which means that for example a lane assistant is automatically activated.

WO 2007/090896 A1 adapts intervention thresholds of a driver assistance system as function of the driver's state of mind.

US 2015/307105 A1 discloses a method, in which a physical and psychological state of the driver is detected and a warning to the driver is generated if the detected state deviates from a target state.

US 2008/071446 A1 discloses a method for controlling a safety-related component of a vehicle as a function of vehicle movement dynamics, wherein an actuation of the safety-related component is carried out as a function of an adaptable threshold value characterizing vehicle movement dynamics that are critical for driving safety.

US 2014/309849 A1 discloses a system comprising a mood module adapted to detect a user's mood based on input from one or more of a biometric measurement and a user interaction subsystem adapted to update one or more vehicle functions based on the detected user's mood.

EP 1 523 435 A1 discloses a driver assistance system for assisting the driver of a vehicle during dangerous or emergency braking situations, wherein the speed of the vehicle, actuation of an accelerator pedal by the driver, actuation of a brake pedal by the driver and the current driving situation, at least the distance and relative speed in relation to a preceding vehicle, are detected and intervention in the braking control occurs based on all detected values.

One problem is that all of the known systems focus primarily on the attention level or drowsiness of the driver, but do not bear in mind that even other moods of the driver might lead to a behaviour or operation of the vehicle, which is not adequate for the respective driving situations. For example, an aggressive driver may take risks while driving, which is not only dangerous for him, but also for other traffic participants.

It is an object of the present invention to provide a vehicle and a method for assisting a driver in driving a vehicle, with which a driver can be prevented from risky driving when it might be assumed that he tends to make any risky manoeuvre.

This object is achieved by the method and vehicle according to the enclosed independent claims. The inventive vehicle comprises a driver assistance system capable of intervening in a driving operation of a vehicle. In order to control whether the system shall intervene or not, specific attributes and/or behaviour of the driver are observed and if measured values of these attributes exceed a predetermined threshold of the driver and/or the driver's behaviour allows to conclude that the driver is in a particular mood, then a threshold for an intervention is adapted. A prominent example for using such adapted threshold is the above-mentioned ESC, which, in case that the turning ratio, speed and steering angle are not in a proper relationship to each other assists the turning movement by individually braking a wheel of the vehicle. According to the present invention, the vehicle comprises at least one sensor so that at least one attribute of a driver can be sensed, wherein such attribute is indicative of a driver's mood. A plurality of such attributes might be thought of. For example, blood pressure, face expression, frequency of his voice, volume when speaking, or many more. Basically, the term "attribute of a driver that is indicative of a driver's mood" may be anything that can be observed, perceived or measured, which allows to conclude that the driver is in one particular mood, either taking into consideration the attribute alone or in combination with other information. In case the driver is inclined to drive more risky than usually anger, rage wrath or other specific moods are the reason. However, also a very positive mood for example euphoria may be the reason for such risky driving.

Apart or in addition to the sensed attributes of the driver, also the driver's behaviour may be observed. Such behaviour, for example the way the driver operates the vehicle or drives the vehicle, can also give an indication for the current mood the driver is in. When driving manoeuvres are performed for example very harsh, which cannot be interpreted as sporty driving, it can be concluded that the driver is currently rather aggressive. Such observation of a driver's behaviour may even include actions that are not directly related to the driving itself. For example if the driver enters the vehicle and slams the door, in most cases this is an expression of anger or the like.

Then, from the sensed attributes and the observed driver's behaviour, it is determined whether the driver is in such a mood, in which the driver is inclined to drive risky. This determination is performed based on sensor signal(s), and a processor finally determines a threshold for intervention of the assistance system. This means that in case it is determined that the driver is in a mood, where he is inclined to drive risky, the threshold for intervening in the driver operation for driving the vehicle is lowered. As a result, the driver is not only kept away from the physical borderline when driving the vehicle, but he is simultaneously and intuitively warned that his current driving behaviour is rather risky. Here, it is in particular used that on the one side, such ESC systems are already available in most of modern vehicles and thus no additional components on the vehicle is necessary. But on the other side, one major advantage is that the driver will intuitively recognize that his behaviour is risky when he feels that the assistant system intervenes his driving operation. According to the invention, an ESC intervention threshold is adapted and the driver will recognize that an individual braking of a wheel is performed. Since the activation and intervention of the ESP is performed automatically and fully in line with its regular operation but with an adapted threshold the driver will furthermore be informed by a sign, a warning lamp or the like that the ESP is in fact actively intervening. Usually this will automatically make clear that a calmer way of driving should be performed by the driver.

Although this approach does not directly address the mood of the driver as it is known from other prior art where the intention of the systems is to calm down the driver, but indirectly by emphasizing the current risk of driving to the driver. This will in the end automatically calm down the driver but in first place this is also suitable to reduce the risk of his current driving manoeuvre.

Advantageous aspects of the present invention are detailed in the dependent claims.

According to the invention, operational forces of the driver interacting with a component of the vehicle are measured. Such forces might be for example how strong the driver holds the steering wheel, how he touches a shift stick, how he pushes buttons of an entertainment or navigation system, how he closes the door and the like. If the driver is in fact angry, upset or in a comparable mood, that will result in more risky driving, in most cases automatically he will be also more aggressive with respect to the operation of the vehicle. In order to analyze such aggressive or harsh operation of vehicle components the vehicle is equipped with at least one sensor to measure directly or indirectly a force that is used by the driver to operate components of the vehicle. Forces that may be directly measured are for example how strong the driver holds the steering wheel or pushes a button which can be measured directly. On the other side if for example the door of the car is slammed, this can be measured only indirectly and could be even measured using an acoustic measurement.

According to a further advantageous aspect, the driver's behaviour is observed including observing vehicle state parameters to determine the driver's behaviour from such parameters. This is in particular done in order to analyse the driver's driving manoeuvres with respect to the traffic situation in which the vehicle is operated. For analysing a traffic scene in order to determine a traffic situation, a vehicle comprises one or more sensors and processor for processing the sensed values. Based on this analysis of the traffic situation and the observed driver behaviour, it is then possible to determine if the driving behaviour of the driver is adequate for the determined traffic situation. If not, for example because the acceleration and steering show high vehicle dynamics it can be gathered that the driver is aggressive and not only driving sporty, because in the case of sporty driving, the traffic situation would allow such high driving dynamics contrary to for example dense traffic. According to the invention, the individual braking is performed by an ESC. As mentioned already this has the advantage that on the one side a direct safety aspect is fulfilled but on the other side the driver is given a predictive warning. He would immediately recognize that when he goes on driving as he did, there would be a serious consequence. This extends or changes the usually reactive character of driver assistant systems like ESC into the direction of preventive or foresighted support.

According to the invention, the driver's behaviour pattern is used to analyse the driver's mood using at least two unrelated behaviours.

Using such a pattern, for example, door slamming as a first driver behaviour and then driving with high vehicle dynamics which is basically independent from the door slamming action itself, can help to distinguish between sport driving and aggressive driving. Using such behaviour patterns for distinguishing between different driver moods is thus helpful in order to annoy a driver who is perfectly calm but wants to drive sporty by intervening in his driver operation.

Furthermore, a refined setting of the thresholds is advantageous. This is achieved by subdividing the mood in which the driver inclined to drive risky into a plurality of categories, at least two. Thus, different thresholds can be set in case that the driver drives risky because of a positive mood, or anger, or rage or wrath. Of course, other mood might be thought of.

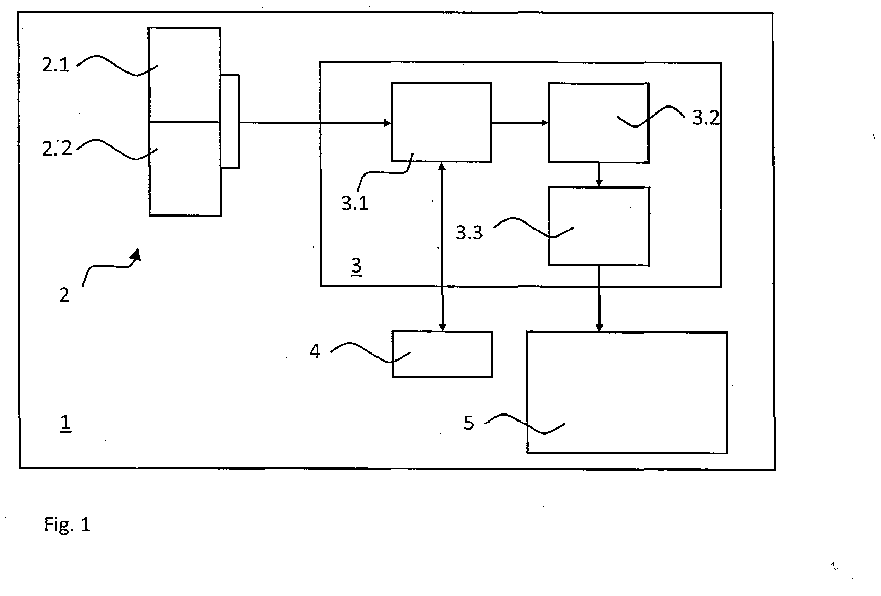

The invention will be now described in detail with respect to the drawings in which a preferred embodiment of the inventor is described. The drawings show in
Fig. 1 a block diagram illustrating the main components of the vehicle capable to perform the inventive method; and
Fig. 2 a simplified flow chart to illustrate the main method steps according to the present invention.

Vehicle 1 comprises a plurality of sensors 2. The plurality of sensors 2 preferably comprise a first group of sensors 2.1 and a second group of sensors 2.2. The first group of sensors 2.1 is used for determining values describing attributes or characteristics of the driver himself and for example include a camera for determining face expressions, eye direction, pulse rate, blood pressure and the like. Vehicle sensors 2.2 are all sensors that either directly deliver information on the state of the vehicle itself or indirectly describe characteristics of the driver that allow accessing a mood of the driver. Such sensors may be used for measuring forces, position information of the vehicle, or the like. The values that are generated by the sensors 2 are supplied as signals to a processor 3. The processor 3 at least comprises a mood determination unit 3.1, a threshold determination unit 3.2 and a signal generator 3.3. The mood determination unit 3.1, the threshold determination unit 3.2 and the signal generator 3.3. are realized as functional units in software that is executed by processor 3. In the mood determination unit 3,1 the signals from the sensors 2 are analysed and the mood of the driver is determined. In order to do so, the signals that are received from the sensors 2 are for example compared to signal thresholds or combinations of signal thresholds that are stored in a table of a memory 4 which is connected to a processor. In such table, thresholds or sets of thresholds for the respective sensor signal(s) are stored. This means that for each mood that may be determined by the mood determination unit 3.1 a set of individual thresholds for the individual sensor signals is stored. If the combination of received sensor signals exceeds at least to a certain extent these thresholds it is concluded that the driver is in the correspondingly associated mood. Information about the determined mood is then fed to the threshold determination unit 3.2. It is to be noted that algorithms for determining a driver's mood are known already and existing algorithms may be used for the present invention.

In the threshold determination unit 3.2 a threshold for intervening into the driving operation by means of an ESC 5 is determined. In case that a mood of the driver is determined which does not bear the risk of aggressive or risky driving, this threshold is the default threshold for intervention as it is used in already existing systems and a vehicle that is not equipped with the present invention. This default threshold may either be set based on the output of the threshold determination unit 3.2 or may be pre-stored in the ESC 5. In the latter case, the threshold determination unit 3.2 preferably determines only a deviation from the default settings. The output of the threshold determination unit 3.2 is then supplied to a signal generator 3.3 in which a signal is generated which is supplied to the ESC 5. Based on this signal from the signal generator 3.3 the ESC 5 then sets the threshold which is thereafter used in the ESC algorithm.

It is to be noted that the operation of the EPC 5 itself using a predetermined threshold for intervening is well known from the prior art. The invention is directed to the adaptation of the threshold for intervention based on a determined driver's mood. As mentioned above, two general ways for adaptation are possible: First, the ESC 5 may have set a default value for the threshold which is used in any case where no further signal from the processor 3 is received. Only if a mood of a driver is determined which indicates that the driver might be willing to accept a higher risk while driving the default threshold set in the ESC 5 is overwritten by an adapted value based on the signal provided from the processor 3. The adaptation of the threshold then causes the ESC 5 to intervene already when a lower threshold is reached by parameters that are used as indicators for an intervention by the ESC 5. Second, a delta signal may be generated by signal generator 3.3 that defines the amount of reduction of the threshold.

In the mood determination unit 3.2 a plurality of different moods of the driver may be determined which all indicate that the driver is willing to accept a higher risk level. Depending on the determined mood which may be anger, rage, wrath, joy or the like, different values for the threshold finally set in the ESC 5 may be determined. The respective threshold or reduction value is then determined based on the mood in the threshold determining unit 3.2.

The advantage of the present invention is that based on a driver's mood not only safe driving is ensured by the ESC 5, but at the same time the driver is warned by an earlier intervention of the ESC 5 that he is currently accepting a high risk when driving. Although the driver's mood may not be changed directly as suggested in other proposals where the driver's mood is determined, this may result in the driver adapting his driving behaviour.

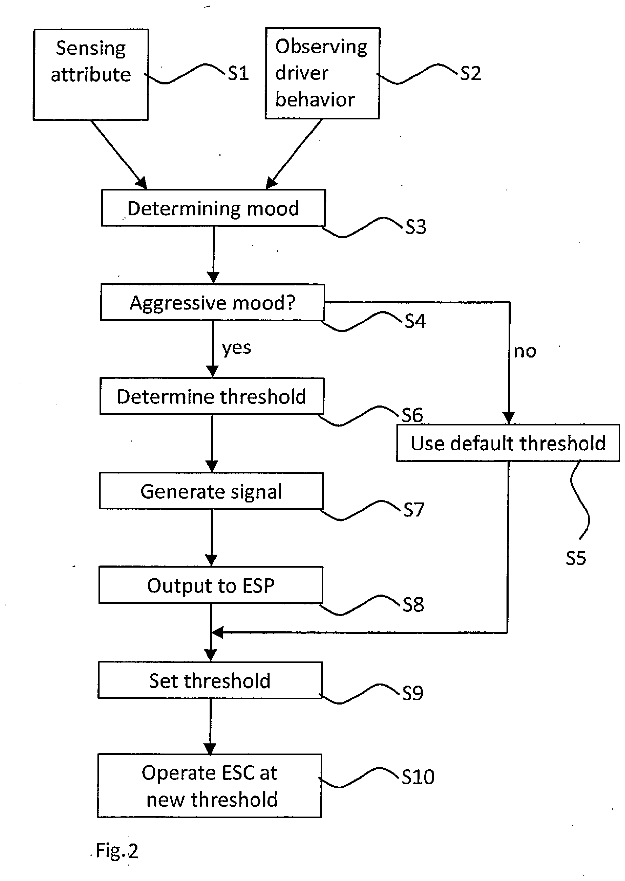

Fig. 2 shows a simplified flow chart. At first in step S1 the attributes of the driver are sensed by the driver sensors 2.1. Simultaneously the vehicle 1 is observed by vehicle sensors 2.2 which includes determination of a driver's behaviour. This driver behaviour may include driving manoeuvres as well as operation of components or operational elements of the vehicle 1. The outputs from the sensors 2.1 and 2.2 are then used to determine a driver's mood in step S3. Determination of the driver's mood may be limited to determining only such moods that are increasing the driver's willingness to driver at high risk hereafter summed up as aggressive mood. Other moods might be determined as well but are not used for an adaptation of the threshold used in the ESC 5. So all other moods which usually do not result in risky driving can be summed up in one category.

Then in step S4 it is determined whether the mood that was determined in step S3 is an aggressive mood, meaning the driver is inclined to drive at high risk. If no such mood is determined the default threshold for intervention in the ESC 5 is set in step S5. As mentioned above, alternatively in such a case that no aggressive mood is determined in step S 4, no signal at all may be provided by the processor 3 and the ESC 5 operates with an internally stored default value. If on the other hand a dangerous mood of the driver is determined step S4, then in the next step S6 a new threshold (or a delta value for the threshold) is determined based on the respective mood. In the simplest way this can be a reduction which is independent of a particular (aggressive) mood of the driver which means that it is only distinguished between a mood where a driver is generally inclined to drive at high risk and a mood where he is not.

Then in step S7 and based on the determined threshold, a (delta) signal is generated and output in step S8 to the ESC 5. Finally, a new threshold is set in the ESC 5 in step S9 the ESC 5 is operated using the adapted threshold for intervention (step S10) in which intervention of the ESC 5 is initiated in a respective driving situation such that the ESC 5 brakes individual wheels in a known manner.

It is to be noted that the present invention generally may be used in combination with any driver assistance system that intervenes with the driving operation of a driver by directly acting on actuators of the vehicle itself. The most prominent example of cause is the ESC 5 but also braking systems like ABS or other brake assistants may be used. Further, while the above given explanation is used to increase the safety when it is determined that the driver is in an aggressive mood it might as well be thought of determining whether the driver is in a mood where he is inclined to take higher risks but only because of sporty driving. In that case the threshold for intervention by the ESP could even be raised in comparison to the default settings. Here a further indicator like pushing a sport mode button of the vehicle may be used for evaluating if the driver is in such a mood.

## Claims

1. Method for assisting a driver in driving a vehicle, the method comprising the steps of:
- sensing at least one attribute of a driver that is indicative of a driver's mood (S1), and/or
- observing a driver's behaviour (S2), and
- determining whether the driver is in a mood in which the driver is inclined to drive risky (S3, S4),
- generating, if the driver is in said mood, a warning to the driver by adapting a threshold for an intervention (S7) of an electronic stability control system (5) of the vehicle so that the driver is warned by individually braking a wheel of the vehicle, wherein
the determination of the driver's mood (S3) includes an analysis of a behaviour pattern including at least two unrelated behaviours in order to distinguish between different driver moods including sport driving, which is interpreted as non-risky and aggressive driving, which is interpreted as risky, and
the at least two unrelated behaviours are determined by measuring operational forces of the driver caused by the driver interacting with a component of the vehicle and analyzing the driver's driving manoeuvres with respect to a traffic situation in which the vehicle is operated.

2. Method according to claim 1,
**characterized in that**
observing the driver's behaviour (S2) includes observing vehicle state parameters to conclude the driver's behaviour from such parameters.

3. Method according to any one of claims 1 and 2,
**characterized in that**
a mood of the driver in which the driver is inclined to drive risky is subdivided into at least two categories and the threshold for the electronic stability control system (5) to intervene is set differently based on the respective determined category.

4. Vehicle comprising an electronic stability control system (5) intervening in the driving operation of a driver when specific parameters of a driving state exceed a predetermined threshold, wherein the vehicle further comprises
at least one sensor (2) adapted to sense at least one attribute of a driver that is indicative of a driver's mood, and/or at least one sensor adapted to determine a way the driver operates the vehicle and/or drives the vehicle, the at least one sensor (2) being coupled to a processor (3) to supply the sensor output,
the processor (3) being configured to determine a driver's mood based on the sensor output,
wherein
the processor (3) is configured to generate a warning to the driver, when it is determined by the processor (3) that the driver is in a mood where the driver is inclined to drive risky, by adapting a threshold for an intervention (S7) of the electronic stability control system (5) so that the driver is warned by individually braking a wheel of the vehicle, wherein
the processor (3) is configured to perform an analysis of a behaviour pattern including at least two unrelated behaviours in order to distinguish between different driver moods including sport driving, which is interpreted as non-risky and aggressive driving, which is interpreted as risky,
the vehicle (1) comprises at least one sensor (2) configured to measure directly or indirectly a force used by the driver to operate components of the vehicle (1) and to detect the current traffic situation in which the vehicle is operated, and
the processor (3) is configured to analyze driver's driving manoeuvres with respect to the current traffic situation and to determine the at least two unrelated behaviours based on the measured operational forces of the driver caused by the driver interacting with the component of the vehicle and the analysed driver's driving manoeuvres.

5. Vehicle according to claim 4,
**characterized in that**
the processor (3) is connected to a memory (4) in which different patterns of behaviours are stored associated with a driver's mood.

## Patentansprüche

1. Verfahren zur Unterstützung eines Fahrers beim Führen eines Fahrzeugs, wobei das Verfahren die folgenden Schritte aufweist:
- Erfassen zumindest eines auf die Stimmung eines Fahrers hinweisenden Attributs (S1), und/oder
- Beobachten des Verhaltens des Fahrers (S2), und
- Bestimmen, ob sich der Fahrer in einer Stimmung befindet, in der er zu einer riskanten Fahrweise neigt (S3, S4),
- Erzeugen, wenn sich der Fahrer in der genannten Stimmung befindet, einer Warnung an den Fahrer, durch Anpassen eines Schwellenwerts für einen Eingriff (S7) eines elektronischen Stabilitätskontrollsystems (5) des Fahrzeugs, so dass der Fahrer durch individuelles Abbremsen eines Rades des Fahrzeugs gewarnt wird, wobei
die Bestimmung der Stimmung des Fahrers (S3) eine Analyse eines Verhaltensmusters umfasst, welches zumindest zwei voneinander unabhängige Verhaltensweisen enthält, um zwischen verschiedenen Stimmungen des Fahrers zu unterscheiden, einschließlich als nicht riskant interpretierten sportlichen Fahrens und als riskant interpretierten aggressiven Fahrens, und
die zumindest zwei voneinander unabhängigen Verhaltensweisen durch Messung von Betätigungskräften des Fahrers, die durch die Interaktion des Fahrers mit einer Fahrzeug-Komponente verursacht werden, und durch Analyse der Fahrmanöver des Fahrers in Bezug auf eine Verkehrssituation, in der das Fahrzeug betrieben wird, bestimmt werden.

2. Verfahren nach Anspruch 1,
**dadurch gekennzeichnet, dass**
das Beobachten des Verhaltens des Fahrers (S2) das Beobachten von Fahrzeugzustands-Parametern umfasst, um aus diesen Parametern auf das Verhalten des Fahrers zu schließen.

3. Verfahren nach einem der Ansprüche 1 und 2,
**dadurch gekennzeichnet, dass**
eine Stimmung des Fahrers, in der der Fahrer zu riskantem Fahren neigt, in zumindest zwei Kategorien unterteilt wird, und die Eingriffsschwelle für das elektronische Stabilitätskontrollsystems (5) in Abhängigkeit von der jeweils ermittelten Kategorie unterschiedlich eingestellt wird.

4. Fahrzeug mit einem elektronischen Stabilitätskontrollsystem (5), welches in den Fahrbetrieb eines Fahrers eingreift, wenn bestimmte Parameter eines Fahrzustands einen vorbestimmten Schwellenwert überschreiten, wobei das Fahrzeug ferner aufweist
zumindest einen Sensor (2), der geeignet ist, zumindest ein Attribut eines Fahrers zu erfassen, das auf die Stimmung eines Fahrers hinweist, und/oder zumindest einen Sensor, der geeignet ist, eine Art und Weise zu bestimmen, wie der Fahrer das Fahrzeug führt und/oder das Fahrzeug fährt, wobei der zumindest eine Sensor (2) mit einem Prozessor (3) gekoppelt ist, um die Sensorausgabe zu liefern,
wobei der Prozessor (3) so ausgebildet ist, dass er die Stimmung des Fahrers auf der Grundlage der Sensorausgabe bestimmt,
wobei
der Prozessor (3) so ausgebildet ist, dass er eine Warnung an den Fahrer erzeugt, wenn der Prozessor (3) feststellt, dass der Fahrer in einer zu riskantem Fahren neigenden Stimmung ist, indem er einen Schwellenwert für einen Eingriff (S7) des elektronischen Stabilitätskontrollsystems (5) so anpasst, dass der Fahrer durch individuelles Abbremsen eines Rades des Fahrzeugs gewarnt wird, wobei
der Prozessor (3) so ausgebildet ist, dass er eine Analyse eines zumindest zwei voneinander unabhängige Verhaltensweisen umfassenden Verhaltensmusters durchführt, um zwischen verschiedenen Stimmungen des Fahrers zu unterscheiden, einschließlich als nicht riskant interpretierten sportlichen Fahrens und als riskant interpretierten aggressiven Fahrens,
das Fahrzeug (1) zumindest einen Sensor (2) aufweist, der so ausgebildet ist, dass er direkt oder indirekt eine Kraft misst, die der Fahrer bei der Betätigung von Fahrzeug-Komponenten einsetzt, und die aktuelle Verkehrssituation erfasst, in der das Fahrzeug (1) betrieben wird, und
der Prozessor (3) so ausgebildet ist, dass er die Fahrmanöver des Fahrers in Bezug auf die aktuelle Verkehrssituation analysiert und die zumindest zwei voneinander unabhängigen Verhaltensweisen auf der Grundlage der gemessenen, durch die Interaktion des Fahrers mit der Fahrzeug-Komponente verursachten Betätigungskräfte des Fahrers und der analysierten Fahrmanöver des Fahrers bestimmt.

5. Fahrzeug nach Anspruch 4,
**dadurch gekennzeichnet, dass**
der Prozessor (3) mit einem Speicher (4) verbunden ist, in dem verschiedene, der Stimmung des Fahrers entsprechende Verhaltensmuster gespeichert sind.

## Revendications

1. Procédé pour assister un conducteur lors de la conduite d'un véhicule, le procédé comprenant les étapes consistant à :
- détecter au moins un attribut d'un conducteur qui indique une humeur d'un conducteur (51), et/ou
- observer un comportement du conducteur (S2), et
- déterminer si le conducteur est d'une humeur dans laquelle le conducteur a tendance à conduire de manière risquée (S3, S4),
- générer, si le conducteur est de ladite humeur, un avertissement pour le conducteur en adaptant un seuil pour une intervention (S7) d'un système électronique de contrôle de la stabilité (5) du véhicule de sorte que le conducteur soit averti en faisant freiner individuellement une roue du véhicule, dans lequel
la détermination de l'humeur du conducteur (S3) comporte une analyse d'un modèle de comportements comportant au moins deux comportements sans rapport afin de faire une distinction entre différentes humeurs de conducteur y compris une conduite sportive, qui est interprétée comme non risquée, et une conduite agressive, qui est interprétée comme risquée, et
les au moins deux comportements sans rapport sont déterminés en mesurant des forces opérationnelles du conducteur causées par le conducteur interagissant avec un constituant du véhicule et en analysant les manoeuvres de conduite du conducteur relativement à une situation de circulation dans laquelle le véhicule fonctionne.

2. Procédé selon la revendication 1,
**caractérisé en ce que**
l'observation du comportement du conducteur (S2) comporte l'observation de paramètres d'état de véhicule pour conclure le comportement du conducteur à partir de ces paramètres.

3. Procédé selon l'une quelconque des revendications 1 et 2,
**caractérisé en ce que**
une humeur du conducteur dans laquelle le conducteur a tendance à conduire de manière risquée est subdivisée en au moins deux catégories et le seuil pour que le système électronique de contrôle de la stabilité (5) intervienne est fixé différemment sur la base de la catégorie déterminée respective.

4. Véhicule comprenant un système électronique de contrôle de la stabilité (5) intervenant dans l'opération de conduite d'un conducteur lorsque des paramètres spécifiques d'un état de conduite excèdent un seuil prédéterminé, dans lequel le véhicule comprend en outre
au moins un capteur (2) adapté pour détecter au moins un attribut d'un conducteur qui indique une humeur d'un conducteur, et/ou au moins un capteur adapté pour déterminer une façon dont le conducteur fait fonctionner le véhicule et/ou conduit le véhicule, l'au moins un capteur (2) étant couplé à un processeur (3) pour fournir la sortie de capteur,
le processeur (3) étant configuré pour déterminer une humeur du conducteur sur la base de la sortie de capteur,
dans lequel
le processeur (3) est configuré pour générer un avertissement pour le conducteur, lorsqu'il est déterminé par le processeur (3) que le conducteur est d'une humeur où le conducteur a tendance à conduire de manière risquée, en adaptant un seuil pour une intervention (S7) du système électronique de contrôle de la stabilité (5) de sorte que le conducteur soit averti en faisant freiner individuellement une roue du véhicule, dans lequel
le processeur (3) est configuré pour réaliser une analyse d'un modèle de comportements comportant au moins deux comportements sans rapport afin de faire une distinction entre différentes humeurs de conducteur y compris une conduite sportive, qui est interprétée comme non risquée, et une conduite agressive, qui est interprétée comme risquée,
le véhicule (1) comprend au moins un capteur (2) configuré pour mesurer directement ou indirectement une force utilisée par le conducteur pour faire fonctionner des constituants du véhicule (1) et pour détecter la situation de circulation courante dans laquelle le véhicule fonctionne, et
le processeur (3) est configuré pour analyser des manoeuvres de conduite du conducteur relativement à la situation de circulation courante et pour déterminer les au moins deux comportements sans rapport sur la base des forces opérationnelles mesurées du conducteur causées par le conducteur interagissant avec le constituant du véhicule et des manoeuvres de conduite du conducteur analysées.

5. Véhicule selon la revendication 4,
**caractérisé en ce que**
le processeur (3) est connecté à une mémoire (4) dans laquelle différents modèles de comportements sont stockés associés à une humeur du conducteur.
